# EUROPÄISCHE PATENTSCHRIFT

(11) **EP 0 275 496 B1**
(45) Veröffentlichungstag und Bekanntmachung des Hinweises auf die Patenterteilung: **03.03.1993**
(21) Anmeldenummer: 87118647.4
(22) Anmeldetag: 16.12.1987
(51) Int. Cl.: B60R 11/02, H05K 5/02

(54) **Anordnung zum elektrischen Anschluss eines Gerätes**
Arrangement for electrically connecting an apparatus
Dispositif de connexion électrique d'un appareil

(30) Priorität: 19.01.1987 DE 3701373
(43) Veröffentlichungstag der Anmeldung: 27.07.1988
(73) Patentinhaber: Blaupunkt-Werke GmbH, 31132 Hildesheim (DE)
(72) Erfinder: Wolkewitz, Klaus, D-3200 Hildesheim (DE); Scheck, Alfons, D-3200 Hildesheim (DE); Seeberger, Kurt, D-3202 Bad Salzdetfurth (DE)
(74) Vertreter: Eilers, Norbert, Dipl.-Phys.

(56) Entgegenhaltungen:
- US-A- 4 063 683
- US-A- 4 473 755

## Beschreibung

Die Erfindung geht aus von einer Anordnung nach der Gattung des Hauptanspruchs.

Zum elektrischen Anschluß eines Autoradios an das Bordnetz und an weitere im Kraftfahrzeug eingebaute Geräte, wie beispielsweise Lautsprecher und drahtgebundene Fernbedieneinrichtungen, sind Leitungen und Steckvorrichtungen erforderlich, deren Zahl unter Umständen recht groß sein kann. Dabei sollte eine Anschlußanordnung derart gestaltet sein, daß sie eine einfache Montage des Autoradios ermöglicht. Ferner sollte dabei sichergestellt sein, daß in ein Kraftfahrzeug verschiedenartige Autoradios eingebaut werden können, ohne daß die im Kraftfahrzeug vorhandene Verkabelung einschließlich der Steckvorrichtungen geändert zu werden braucht. Außerdem ist zu gewährleisten, daß ein Autoradio ohne teure Anpassungsmaßnahmen in verschiedene Kraftfahrzeuge paßt.

Diese Forderungen an eine Anschlußanordnung konnten bisher nicht in befriedigender Weise erfüllt werden.

Die erfindungsgemäße Anordnung mit den kennzeichnenden Merkmalen des Hauptanspruchs weist den Vorteil auf, daß eine Anpassung eines Autoradios an die Art der Anschlüsse in einem Kraftfahrzeug leicht und preiswert möglich ist. Die Anordnung ist auch bei anderen Geräten, wie beispielsweise Kassettenrecordern und Funkgeräten, verwendbar. Die durch die Erfindung erreichte Flexibilität ist nicht nur bei der sogenannten Erstausrüstung von Kraftfahrzeugen mit Autoradios beim Kraftfahrzeughersteller sondern auch für die spätere Nachrüstung von Vorteil.

Durch die in den Unteransprüchen aufgeführten Maßnahmen sind vorteilhafte Weiterbildungen und Verbesserungen der im Hauptanspruch angegebenen Erfindung möglich.

Insbesondere kann die Typenvielfalt der Anschlußanordnungen bei der Fertigung und der Lagerhaltung vermindert werden. Jeweils für eine Anschlußart im Kraftfahrzeug ist nur eine Ausführung der ersten Baugruppe erforderlich, während die Zahl verschiedener zweiter Baugruppen nur durch die Varianten der Autoradios gegeben ist und nicht durch verschiedene Kraftfahrzeugtypen vervielfacht wird.

Ein Ausführungsbeispiel der Erfindung ist in der Zeichnung an Hand mehrerer Figuren dargestellt und in der nachfolgenden Beschreibung näher erläutert. Es zeigt:
- Fig. 1: das Ausführungsbeispiel in perspektivischer Darstellung,
- Fig. 2: die erste Baugruppe des Ausführungsbeispiels als Schnitt und als Ansicht,
- Fig. 3: die zweite Baugruppe des Ausführungsbeispiels in drei Ansichten und
- Fig. 4: einen Distanzrahmen in drei Ansichten.

Gleiche Teile sind in den Figuren mit gleichen Bezugszeichen versehen.

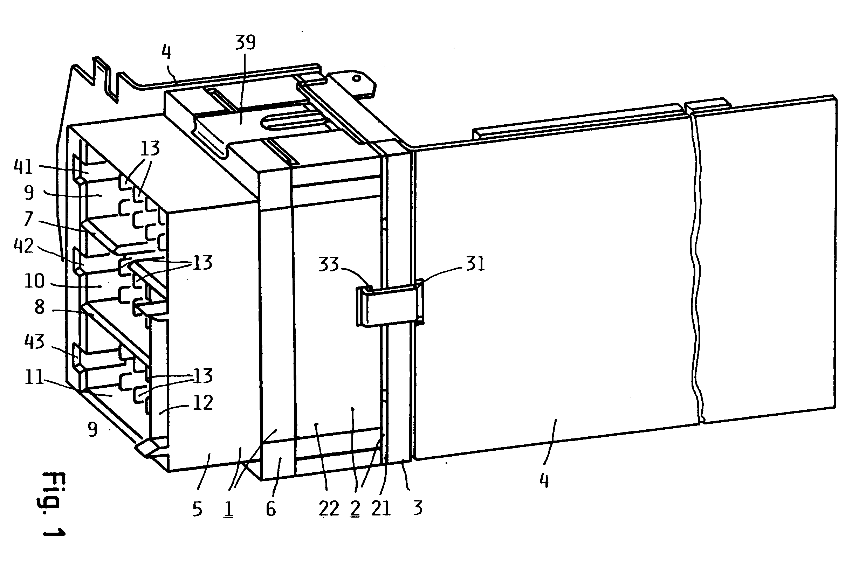

Die in Fig. 1 dargestellte Anschlußanordnung besteht aus einer ersten Baugruppe 1, einer zweiten Baugruppe 2 und einem Distanzrahmen 3 und ist an einem Seitenteil 4 eines des weiteren nicht dargestellten Autoradios befestigt. Das Seitenteil 4 ist derart geformt, daß an einer der hinteren Ecken des Autoradios eine Aussparung entsteht, so daß die Anschlußanordnung im wesentlichen innerhalb der quaderförmigen Kontur des Autoradios jedoch außerhalb des Autoradiogehäuses liegt.

Die erste Baugruppe 1 besteht einstückig aus einem Rahmen 5 und einer Grundplatte 6. Durch Stege 7, 8, 9 wird die erste Baugruppe 1 bzw. der Rahmen 5 in verschiedene Kammern 9, 10, 11, 12 aufgeteilt, welche jeweils Flachkontakte 13 enthalten, die in der Grundplatte gehalten werden.

Bei dem dargestellten Ausführungsbeispiel sind in der Kammer 9 Kontakte für die Betriebsspannung, für die Steuerung der Motorantenne und für den Anschluß der Skalenbeleuchtung des Autoradios an die einstellbare Betriebsspannung für die Armaturenbrettbeleuchtung vorgesehen. In der Kammer 10 befinden sich die Kontakte für vier Lautsprecher einschließlich der Masseanschlüsse, während die Kammer 11 Kontakte für verschiedene Signale, beispielsweise NF-Signale und Daten für eine zweite Anzeigevorrichtung, enthält. Bei den Kammern 9, 10, 11 ist jeweils eine Nut 41, 42, 43 als Schutz gegen Vertauschen und falsches Einsetzen der Stecker der Verkabelung vorgesehen. Schließlich ist die Kammer 12 zur Aufnahme einer Sicherung ausgebildet.

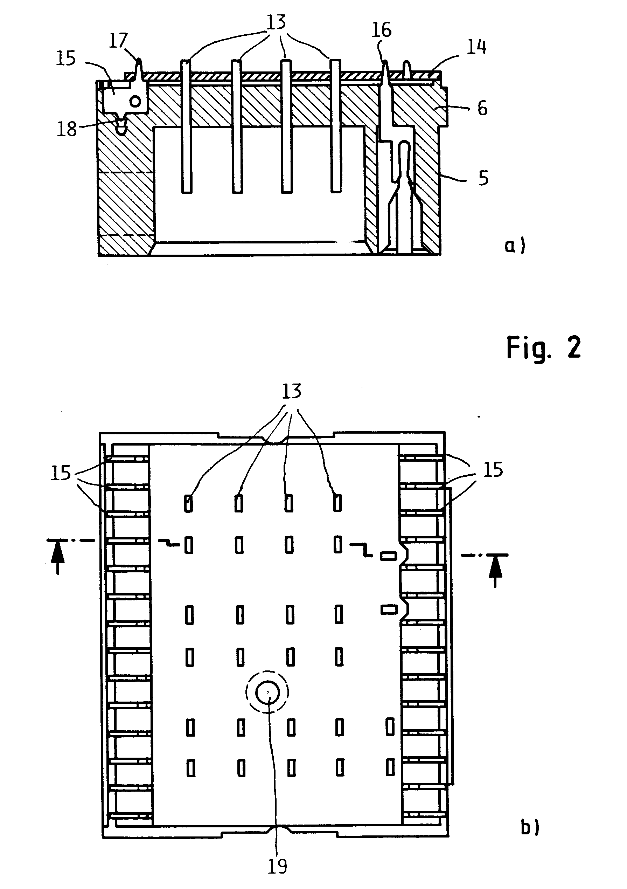

Zur weiteren Erläuterung der ersten Baugruppe wird im folgenden auf Fig. 2 Bezug genommen. Dabei stellt Fig. 2a) einen Längsschnitt durch die erste Baugruppe und Fig. 2b) eine Ansicht der ersten Baugruppe, vom Autoradio her gesehen, dar. Dabei ist eine Leiterplatte 14, welche die Flachkontakte 13 mit in den Randbereichen der Grundplatte angeordneten Messerkontakten 15 verbindet, lediglich in Fig. 2a) dargestellt. Während die Kontakte, die zur Verbindung des Autoradios mit der Verkabelung innerhalb des Kraftfahrzeugs dienen, Flachkontakte 13 sind, sind für eine Sicherung Kontaktfedern 16 vorgesehen.

Die Messerkontakte 15 weisen jeweils eine Lötfahne 17 auf und sind mit einem sägezahnförmig ausgebildeten Teil 18 in dem Spritzgußteil verankert, welches den Rahmen 5 und die Grundplatte 6 bildet. Sowohl in der Grundplatte 6 als auch in der Leiterplatte 14 befindet sich eine Bohrung 19 für eine nicht dargestellte Schraube, mit welcher die erste Baugruppe und damit die gesamte Anschlußvorrichtung über eine Rundsäule am Seitenteil 4 (Fig. 1) des Autoradios befestigt werden kann.

Die Art und Anzahl der Kontakte in der ersten Baugruppe, sowie die Aufteilung in einzelne Kammern ist demjeweiligen Kraftfahrzeug angepaßt. So können beispielsweise anstelle der Flachkontakte auch Rundsteckhülsen verwendet werden. Die Messerkontakte 15 sind jedoch unabhängig vom jeweiligen Kraftfahrzeug für die verschiedenen Spannungen und Signale vorgesehen. Diese werden in die zweite Baugruppe 2 (Fig. 1) geleitet bzw. dieser entnommen, welche außer den entsprechenden Anschlußvorrichtungen im wesentlichen Entstörmittel enthält.

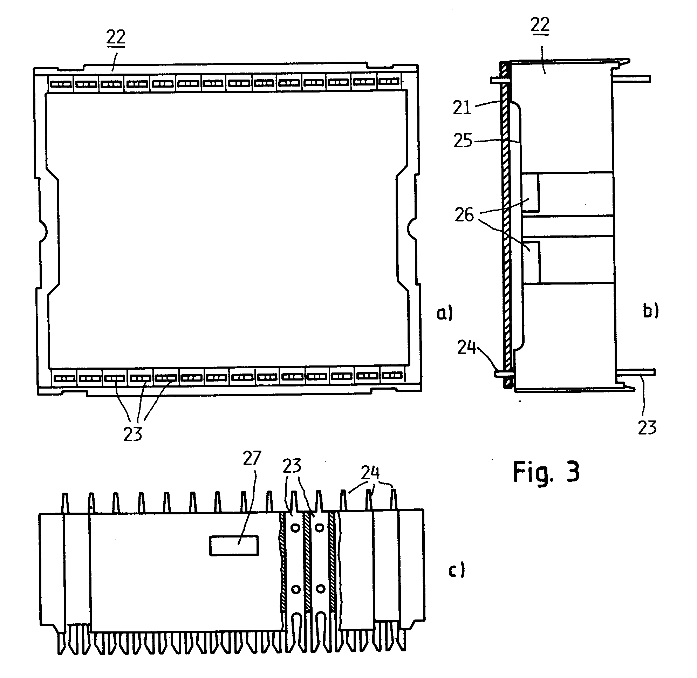

Einzelheiten der zweiten Baugruppe 2, zu der eine Leiterplatte 21 gehört, werden im Zusammenhang mit Fig. 3 erläutert. In einem Zwischenrahmen 22 werden an zwei gegenüberliegenden Seiten Kontaktfedern 23 gehalten, in welche die Messerkontakte 15 (Fig. 2) der ersten Baugruppe 1 eingreifen. Jede Kontaktfeder ist mit einer Lötfahne 24 versehen, welche in an sich bekannter Weise in Löcher der Leiterplatte 21 eingesetzt und mit den Leiterbahnen verlötet sind. An den nicht mit Kontaktfedern 23 besetzten Seiten weist der Zwischenrahmen 22 jeweils eine längliche Aussparung 25 auf, durch die Flachbahnleitungen, welche die auf der Leiterplatte 21 vorgesehene Schaltung mit der Schaltung des Autoradios verbinden, hindurchtreten können. Der Zwischenrahmen 22 weist die zur Aufnahme der auf der Leiterplatte 21 angeordneten Bauelemente erforderliche Höhe auf.

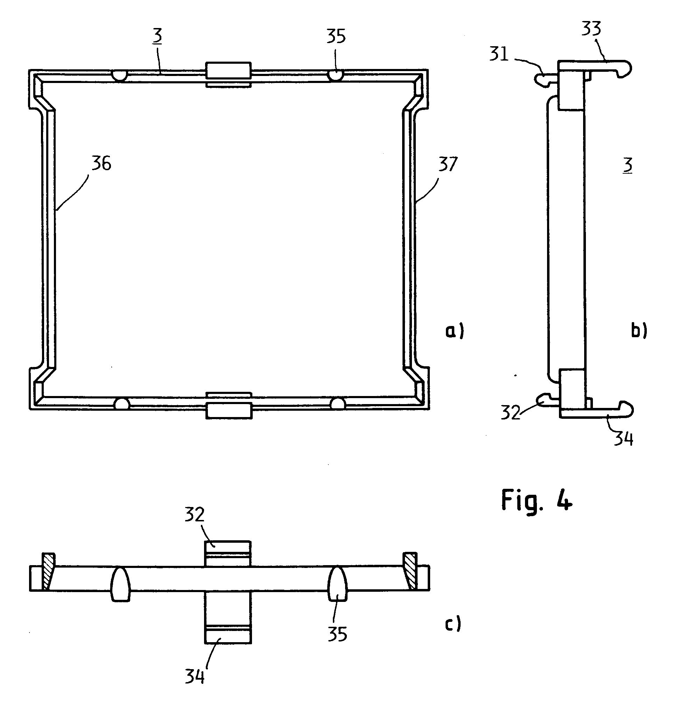

Um auch Platz für die Lötstellen und die durch die Leiterplatte hindurchragenden Lötfahnen 24 der Messerkontakte 23 sowie der Anschlußdrähte der Bauelemente zu erhalten, ist ein Distanzrahmen 3 vorgesehen, der ebenfalls als Spritzgußteil hergestellt ist und in Fig. 4 in drei Ansichten dargestellt ist. Dabei sind an zwei gegenüberliegenden Seiten Rastfedern 31, 32 zum Einrasten des Distanzrahmens 3 in das Seitenteil 4 des Autoradios und Rastfedern 33, 34 zum Einrasten in entsprechende Aussparungen 27 des Zwischenrahmens 22 vorgesehen. Die eigentliche Befestigung der Anschlußanordnung erfolgt jedoch mit der bereits oben erwahnten Schraube. Zur Fixierung der Leiterplatte 21 auf dem Distanzrahmen 3 dienen vier Nocken 35, die in entsprechende Aussparungen der Leiterplatte 21 eingreifen. An zwei gegenüberliegenden Seiten 36, 37 ist der Distanzrahmen eingezogen, um Platz für Flachbahnleitungen vorzusehen, welche durch die länglichen Aussparungen 25 (Fig. 3) des Zwischenrahmens hindurchtreten und in das Innere des Autoradios führen.

Die erste Baugruppe 1 und der Zwischenrahmen 22 werden mit zwei Klammern zusammengehalten, von denen in Fig. 1 lediglich eine Klammer 39 sichtbar ist.

## Patentansprüche

1. Anordnung zum elektrischen Anschluß eines Gerätes oder eines Autoradios, in einem Kraftfahrzeug, dadurch gekennzeichnet,
daß eine erste Baugruppe (1) erste Kontaktvorrichtungen (13), die an im Kraftfahrzeug vorhandene Kontaktvorrichtungen angepaßt sind, und
zweite Kontaktvorrichtungen (15) umfaßt, die an weitere Kontaktvorrichtungen (23) einer zweiten Baugruppe (2) angepaßt sind, und
daß die zweite Baugruppe (2) Entstörmittel enthält und elektrisch und mechanisch mit dem Gerät verbunden ist.

2. Anordnung nach Anspruch 1, dadurch gekennzeichnet,
daß die erste Baugruppe (1) von einem Rahmen (5) und einer vorzugsweise rechteckigen Grundplatte (6) gebildet ist,
daß in der Grundplatte (6) Kontakte (13) gehalten sind, welche die ersten Kontaktvorrichtungen bilden, daß in Randbereichen der Grundplatte (6) die zweiten Kontaktvorrichtungen (15) vorgesehen sind und
daß die ersten und zweiten Kontaktvorrichtungen (13, 15) mittels einer gedruckten Schaltung (14) miteinander verbunden sind.

3. Anordnung nach Anspruch 2, dadurch gekennzeichnet,
daß die zweiten Kontaktvorrichtungen (15) in zwei gegenüberliegenden Randbereichen der Grundplatte (6) vorgesehen sind.

4. Anordnung nach einem der vorhergehenden Ansprüche, dadurch gekennzeichnet,
daß die zweite Baugruppe (2) im wesentlichen von einem Zwischenrahmen (22) und einer Leiterplatte (21) gebildet ist und
daß in dem Zwischenrahmen (22) die weiteren Kontaktvorrichtungen (23) derart vorgesehen sind, daß sie mit den die Kontakte bildenden Teilen und mit Lötfahnen (24) über den Zwischenrahmen (22) hinausragen.

5. Anordnung nach Anspruch 4, dadurch gekennzeichnet,
daß die Leiterplatte (21) im wesentlichen rechteckig ist und
daß die Seitenlängen der Leiterplatte (21), des Zwischenrahmens (22) und der Grundplatte (6) im wesentlichen gleich sind.

6. Anordnung nach Anspruch 5, dadurch gekennzeichnet,
daß die Grundplatte (6) und der Zwischenrahmen (22) durch mindestens zwei an gegenüberliegenden Seiten angeordnete Klammern (39) zusammengehalten sind.

7. Anordnung nach einem der Ansprüche 5 oder 6, dadurch gekennzeichnet,
daß zwischen der Leiterplatte (21) und dem Autoradio ein Distanzrahmen (3) vorgesehen ist, der im wesentlichen die gleichen Seitenlängen wie der Zwischenrahmen (22) aufweist.

8. Anordnung nach Anspruch 7, dadurch gekennzeichnet,
daß der Distanzrahmen (3) Rastfedern (31, 32) zum Einrasten in am Autoradio vorgesehene Aussparungen umfaßt.

9. Anordnung nach einem der Ansprüche 7 oder 8, dadurch gekennzeichnet,
daß der Distanzrahmen (3) Rastfedern (33, 34) zum Einrasten in entsprechende Aussparungen des Zwischenrahmens umfaßt.

## Claims

1. Arrangement for the electrical connection of a device or a car radio, in a motor vehicle, characterised in that a first subassembly (1) comprises first contact devices (13), which are adapted to contact devices provided in the motor vehicle, and second contact devices (15), which are adapted to further contact devices (23) of a second subassembly (2), and in that the second subassembly (2) contains interference-suppression means and is electrically and mechanically connected to the device.

2. Arrangement according to Claim 1, characterised in that the first subassembly (1) is formed by a frame (5) and a preferably rectangular baseplate (6), in that contacts (13), which form the first contact devices, are held in the baseplate (6), in that the second contact devices (15) are provided in edge regions of the baseplate (6) and in that the first and second contact devices (13, 15) are connected to one another by means of a printed circuit (14).

3. Arrangement according to Claim 2, characterised in that the second contact devices (15) are provided in two opposite edge regions of the baseplate (6).

4. Arrangement according to one of the preceding claims, characterised in that the second subassembly (2) is formed essentially by an intermediate frame (22) and a circuit board (21) and in that the further contact devices (23) are provided in the intermediate frame (22) in such a way that they protrude with the parts forming the contact and with soldering tags (24) beyond the intermediate frame (22).

5. Arrangement according to Claim 4, characterised in that the circuit board (21) is essentially rectangular and in that the side lengths of the circuit board (21) of the intermediate frame (22) and of the baseplate (6) are essentially equal.

6. Arrangement according to Claim 5, characterised in that the baseplate (6) and the intermediate frame (22) are held together by at least two clamps (39) arranged on opposite sides.

7. Arrangement according to one of Claims 5 or 6, characterised in that a spacing frame (3), which essentially has the same side lengths as the intermediate frame (22), is provided between the circuit board (21) and the car radio.

8. Arrangement according to Claim 7, characterised in that the spacing frame (3) comprises catch springs (31, 32) for locking into clearances provided on the car radio.

9. Arrangement according to one of Claims 7 or 8, characterised in that the spacing frame (3) comprises catch springs (33, 34) for locking into corresponding clearances of the intermediate frame.

## Revendications

1. Dispositif de connexion électrique d'un appareil ou d'un autoradio d'un véhicule automobile, caractérisé par un premier composant (1) avec des premiers dispositifs de contact (13) adaptés aux dispositif de contact existant dans le véhicule et,
des seconds dispositifs de contact (15) adaptés aux autres dispositifs de contact (23) d'un second composant (2) et,
le second composant (2) comportant des moyens de déparasitage est relié électriquement et mécaniquement à l'appareil.

2. Dispositif selon la revendication 1, caractérisé en ce que,
le premier composant (1) est formé par un châssis (5) et une plaque de base (6) de préférence rectangulaire,
la plaque de base (6) porte des contacts (13) qui forment les premiers dispositifs de contact, et dans les zones du bord de la plaque de base (6) se trouvent les seconds dispositifs de contact (15) et,
les premiers et seconds dispositifs de contact (13, 15) sont maintenus réunis par l'intermédiaire d'un circuit imprimé (14).

3. Dispositif selon la revendication 2, caractérisé en ce que les seconds dispositifs de contact (15) sont prévus dans deux zones marginales opposées de la plaque de base (6).

4. Dispositif selon l'une des revendications précédentes, caractérisé en ce que le second composant (2) est formé par principalement un châssis intermédiaire (22) et une plaque de circuit imprimé (21) et, dans le châssis intermédiaire (22) on a prévu d'autres dispositifs de contact (23) de façon à dépasser par rapport au châssis intermédiaire (22) les pièces formant les contacts et les pattes de soudage (24).

5. Dispositif selon la revendication 4, caractérisé en ce que la plaque de circuit imprimé (21) est essentiellement rectangulaire et,
les côtés de la plaque de circuit imprimé (21), du châssis intermédiaire (22) et de la plaque de base (6) sont essentiellement de même longueur.

6. Dispositif selon la revendication 5, caractérisé en ce que la plaque de base (6) et le châssis intermédiaire (22) sont maintenus réunis par au moins deux pinces (39) prévues sur les côtés opposés.

7. Dispositif selon l'une des revendications 5 ou 6, caractérisé en ce qu'entre la plaque de circuit imprimé (21) et l'autoradio, il est prévu un châssis d'écartement (3) qui a principalement des côtés de même longueur que le châssis intermédiaire (22).

8. Dispositif selon la revendication 7, caractérisé en ce que le châssis d'écartement (3) comporte des ressorts d'encliquetage (31, 32) pour s'encliqueter dans des cavités équipant l'autoradio.

9. Dispositif selon l'une des revendications 7 ou 8, caractérisé en ce que le châssis d'écartement (3) comporte des ressorts d'encliquetage (33, 34) pour s'encliqueter dans les cavités correspondantes du châssis intermédiaire.
